# EUROPÄISCHE PATENTSCHRIFT

(11) **EP 3 372 435 B1**
(45) Veröffentlichungstag und Bekanntmachung des Hinweises auf die Patenterteilung: **07.08.2019**
(21) Anmeldenummer: 17159324.7
(22) Anmeldetag: 06.03.2017
(51) Int. Cl.: B60K 35/00, B60K 37/06, G06F 3/0482, G06F 3/0486, G06F 3/0488

(54) **VERFAHREN UND BEDIENSYSTEM ZUM BEREITSTELLEN EINER BEDIENSCHNITTSTELLE**
METHOD AND OPERATION SYSTEM FOR PROVIDING A CONTROL INTERFACE
PROCÉDÉ ET SYSTÈME DE COMMANDE DESTINÉS À FOURNIR UNE INTERFACE UTILISATEUR

(43) Veröffentlichungstag der Anmeldung: 12.09.2018
(73) Patentinhaber: VOLKSWAGEN AKTIENGESELLSCHAFT, 38440 Wolfsburg (DE)
(72) Erfinder: Chudzinski, Filip Piotr, 20255 Hamburg (DE); Yosha, Omer, 10827 Berlin (DE); Petersen, Sönke, 12205 Berlin (DE)

(56) Entgegenhaltungen:
- EP-A1- 2 930 049
- WO-A1-2014/072177
- US-A1- 2013 293 364

## Beschreibung

Die vorliegende Erfindung betrifft ein Verfahren zum Bereitstellen einer Bedienschnittstelle sowie ein Bediensystem zum Bereitstellen einer Bedienschnittstelle, insbesondere in einem Fahrzeug.

Die Verwendung einer Vielzahl von elektronischen und elektronisch steuerbaren Einrichtungen in vielen Bereichen des täglichen Lebens, etwa in modernen Fahrzeugen, führt zu einem Bedarf an Möglichkeiten, Nutzereingaben zu erfassen und zu verarbeiten. Insbesondere können Einrichtungen oder einzelne ihrer Komponenten durch Schaltelemente angesteuert werden. Um eine Vielzahl von Funktionen eines Systems aufrufen und bedienen zu können, werden vielfach Multifunktionsbediensysteme eingesetzt, welche eine oder mehrere Multifunktionsanzeige(n) und Bedienelemente umfassen, mit denen die Bedienung erfolgt. Die Bedienung wird dabei durch die auf der Multifunktionsanzeige wiedergegebene Information unterstützt beziehungsweise geführt. Ferner kann über das Bediensystem ausgewählt werden, welche Informationen auf der Multifunktionsanzeige angezeigt werden sollen.

Dabei ergibt sich häufig der Fall, dass mehrere Schaltflächen betätigt werden müssen, um bestimmte Menüs oder Anwendungen zu erreichen. Dies erfordert ein hohes Maß an Aufmerksamkeit und Zeit, da der Nutzer die Schaltflächen lokalisieren und zielgenau betätigen muss. Dies ist besonders bei der Anwendung in Kraftfahrzeugen von Nachteil, da der Nutzer hier häufig der Fahrzeugführer ist, der möglichst wenig von seinen Aufgaben der Beobachtung des umgebenden Verkehrs und der Steuerung des Fahrzeugs abgelenkt werden soll.

Bei dem in der WO 2015/062634 A1 vorgeschlagenen Verfahren zum Anpassen des Inhaltes einer Statusleiste kann durch eine Wischgeste im Bereich der Statusleiste ausgewählt werden, welche thematisch zusammengehörigen Symbole und Informationen angezeigt werden sollen.

Die US 2013/0293364 A1 schlägt eine konfigurierbare Anzeige am Armaturenbrett eines Fahrzeugs vor. Die Konfiguration erfolgt mittels eines Touchscreens, auf dem zwei Bereiche gebildet sind. Im ersten Bereich werden die auswählbaren Elemente angezeigt, während im zweiten Bereich eine Repräsentation der zu konfigurieren Anzeige dargestellt ist. Durch Verschieben der Elemente von dem ersten in den zweiten Bereich können sie in der Anzeige angeordnet werden.

In der DE 10 2013 002 891 A1 wird ein Informationswiedergabesystem für ein Fahrzeug beschrieben, bei dem eine Statusleiste am Rand einer berührungsempfindlichen Anzeigefläche sowie ein an die Statusleiste angrenzender Anzeigebereich gebildet werden. Durch eine Wischgeste kann ein Inhalt einer Inhaltskategorie, die einem Ort der Statusleiste zugeordnet ist, in einer Hälfte des Anzeigebereichs angezeigt werden. Die Statusleiste kann konfiguriert werden, indem ein Inhalt, der in einem Teilbereich des Anzeigebereichs angezeigt wird, in die Statusleiste gezogen wird.

Weiterer relevanter Stand der Technik ist aus der EP 2 930 049 A1 bekannt.

Der vorliegenden Erfindung liegt die Aufgabe zugrunde, ein Verfahren und ein Bediensystem bereitzustellen, durch die eine Bedienschnittstelle mit besonders einfacher und schneller Bedienung erzeugt werden kann.

Erfindungsgemäß wird diese Aufgabe durch ein Verfahren mit den Merkmalen des Anspruchs 1 und ein Bediensystem mit den Merkmalen des Anspruchs 14 gelöst. Vorteilhafte Ausgestaltungen und Weiterbildungen ergeben sich aus den abhängigen Ansprüchen.

Bei dem erfindungsgemäßen Verfahren zum Bereitstellen einer Bedienschnittstelle werden Grafikdaten einer Bedienoberfläche erzeugt und ausgegeben, wobei für die Bedienoberfläche ein Standardmodus oder ein Konfigurationsmodus aktivierbar ist. Dabei umfasst die Bedienoberfläche, wenn der Standardmodus aktiviert ist, einen Direktzugriffsbereich. Wenn der Konfigurationsmodus aktiviert ist, umfasst die Bedienoberfläche einen Konfigurationsbereich. Dabei umfasst der Konfigurationsbereich eine Vielzahl von Programmsymbolen, die jeweils einem Anwendungsprogramm zugeordnet sind. Für ein Programmsymbol wird eine Hinzufügegeste erfasst, wobei die Hinzufügegeste eine Zuordnung des Programmsymbols zu einer Position des Direktzugriffsbereich umfasst. Anhand der Hinzufügegeste wird ein Direktzugriffsobjekt, welches dem Anwendungsprogramm des Programmsymbols zugeordnet ist, für den Direktzugriffsbereich erzeugt und anhand der Hinzufügegeste im Direktzugriffsbereich angeordnet. Dabei wird, während die Hinzufügegeste erfasst wird, eine Verschiebungsanimation für das zugeordnete Programmsymbol erzeugt, wobei die Verschiebungsanimation eine Bewegung des Programmsymbols entlang einer Verschiebungstrajektorie umfasst und während der Bewegung entlang zumindest eines Abschnitts der Verschiebungstrajektorie eine kontinuierliche Verkleinerung des Programmsymbols ausgegeben wird.

Auf diese Weise kann eine Konfiguration der Bedienoberfläche auf besonders einfache Weise so vorgenommen werden, dass benötigte Anwendungsprogramme leicht mittels Direktzugriffsobjekten verfügbar gemacht werden. Insbesondere können die Menge und der Inhalt der dargestellten Direktzugriffsobjekten durch den Nutzer selbst konfiguriert werden. Bei bekannten Bedienschnittstellen vorgesehene physische Schalter, durch die eine fest vorgegebene Funktion direkt aufgerufen werden kann, werden ersetzt durch die flexibleren Direktzugriffsobjekte, die beliebig hinzugefügt, entfernt und oder angeordnet werden können.

Die Erzeugung und Ausgabe der Grafikdaten der Bedienoberfläche erfolgt auf an sich bekannte Weise. Als "Bedienoberfläche" im Sinne der Erfindung wird eine Darstellung für eine Mensch-Maschine-Schnittstelle bezeichnet. Dabei sind technische Einrichtungen mittels Steuerelementen bedienbar, wozu etwa Schaltflächen oder Symbole der Darstellung verwendet werden können. Insbesondere kann die Bedienoberfläche Schaltflächen oder andere Bedienelemente umfassen, welche die Bedienung einer Funktionalität für einen Menschen erfassbar darstellen. Beispielsweise kann der Betrag eines Parameters dargestellt werden und seine Einstellung durch ein Einstellelement visualisiert werden. Die Bedienoberfläche kann ferner Elemente zur Informationsanzeige umfassen und damit eine durch einen Menschen interpretierbare Ausgabe ermöglichen.

Unter einer Schaltfläche wird im Sinne der Erfindung ein Steuerelement einer grafischen Benutzerschnittstelle verstanden. Eine Schaltfläche unterscheidet sich von Elementen und Flächen zur reinen Informationsanzeige, sogenannten Anzeigeelementen, darin, dass sie betätigt werden kann. Bei einer Betätigung einer Schaltfläche wird eine ihr zugeordnete Funktion ausgeführt. Die Funktion kann zu einer Veränderung der Informationsanzeige führen und/oder es können Einrichtungen gesteuert werden, deren Bedienung von der Bedienoberfläche unterstützt wird. Die Schaltfläche kann somit einen herkömmlichen mechanischen Schalter ersetzen. Sie kann beliebig für eine frei programmierbare Anzeigefläche erzeugt und von dieser angezeigt werden.

Erfindungsgemäß ist vorgesehen, dass zumindest zwei verschiedene Modi für die Bedienoberfläche aktivierbar sind, wobei insbesondere vorgesehen ist, dass der Standardmodus nicht gleichzeitig mit dem Konfigurationsmodus aktiviert werden kann. Wenn der Standardmodus aktiviert ist, wird die Bedienoberfläche so gebildet, dass die vorgesehenen Eingabemöglichkeiten und Informationsausgaben erfolgen. Ist dagegen der Konfigurationsmodus aktiviert, können Nutzereingaben erfasst werden, anhand derer die Bedienoberfläche selbst konfiguriert werden kann. Diese Konfiguration betrifft beispielsweise eine Auswahl verschiedener Funktionalitäten, für welche entsprechende, gegebenenfalls bedienbare Grafikobjekte innerhalb der Bedienoberfläche vorgesehen sind, oder eine Anordnung dieser Grafikobjekte.

Erfindungsgemäß umfasst die Bedienoberfläche einen Direktzugriffsbereich, der zumindest bei aktiviertem Standardmodus angezeigt wird. Optional kann vorgesehen sein, dass der Direktzugriffsbereich, wenn der Konfigurationsmodus aktiviert ist, auf die gleiche Weise wie im Standardmodus, in einer modifizierten Weise (etwa an einer anderen Position oder mit einer veränderten Anordnung) oder nicht angezeigt wird. Die Darstellung des Direktzugriffsbereichs kann auf verschiedene Weise erfolgen, insbesondere als Abbild der Darstellung, wie sie im Standardmodus erzeugt wird. In dem Direktzugriffsbereich können Direktzugriffsobjekte angeordnet sein, die mit jeweils einem Anwendungsprogramm verknüpft sind. Insbesondere ist dabei vorgesehen, dass die Direktzugriffsobjekte betätigt werden können. Bei einer Betätigung eines Direktzugriffsobjekts kann das zugeordnete Anwendungsprogramm ausgeführt und/oder die Bedienoberfläche so verändert werden, dass Ausgabedaten des zugeordneten Anwendungsprogramms angezeigt werden. Für den Fall, dass der Direktzugriffsbereich angezeigt wird, während der Konfigurationsmodus aktiviert ist, kann vorgesehen sein, dass die Direktzugriffsobjekte entweder weiterhin betätigt werden können oder nicht betätigbar dargestellt werden. Der Begriff "Anwendungsprogramm" wird erfindungsgemäß breit ausgelegt und umfasst insbesondere alle anhand eines Rechners ausführbaren Funktionen, insbesondere anhand einer vorgegebenen Abfolge computerlesbar gespeicherter Instruktionen.

Die Direktzugriffsobjekte können auf verschiedene Weisen gebildet werden. Sie können Symbole umfassen, die das jeweils zugeordnete Anwendungsprogramm symbolisieren, um einem Nutzer eine schnelle und intuitive Bedienung zu gestatten. Ferner können die Direktzugriffsobjekte einen bestimmten Bereich innerhalb der Bedienoberfläche einnehmen, der beispielsweise durch einen dargestellten Rand um diesen Bereich herum markiert werden kann, etwa nach der Art eines analogen Tastschalters.

Der Direktzugriffsbereich kann beispielsweise am Rand der Darstellung der Bedienoberfläche angeordnet sein und beispielsweise einen im Vergleich zu den Abmessungen der ausgegebenen Bedienoberfläche schmalen Bereich einnehmen. Beispielsweise kann bei einer Ausgabe der Bedienoberfläche mittels einer rechteckigen Anzeigefläche der Direktzugriffsbereich als schmaler Streifen an einem der Ränder der Bedienoberfläche gebildet sein.

Ist der Konfigurationsmodus der Bedienoberfläche aktiviert, so wird ein Konfigurationsbereich dargestellt, der eine Vielzahl von Programmsymbolen umfasst. Die Programmsymbole sind jeweils einem Anwendungsprogramm zugeordnet und können zu einer Konfiguration des Direktzugriffsbereichs verwendet werden. Ähnlich wie die Direktzugriffsobjekte können auch die Programmsymbole auf unterschiedliche Weisen gebildet sein. Sie umfassen insbesondere Symbole, die das jeweils zugeordnete Anwendungsprogramm symbolisieren, sodass ein Nutzer dieses Anwendungsprogramm schnell und intuitiv erkennen kann.

Die Bildung des Konfigurationsbereichs kann auf verschiedene Weise erfolgen, insbesondere kann hierfür ein bestimmter Bereich der von der grafischen Bedienoberfläche eingenommenen Fläche reserviert sein. Diese Fläche ist insbesondere größer als die vom Direktzugriffsbereich eingenommene Fläche. Beispielsweise kann auf an sich bekannte Weise ein Anwendungsfenster geöffnet werden, welches den Konfigurationsbereich aufnimmt, oder es kann eine andersartige Abgrenzung gegenüber anderen Elementen der Bedienoberfläche erfolgen, ohne dass hierfür eine Umrandung nach Art eines Anwendungsfensters notwendig ist.

Die Hinzufügegeste kann für das Programmsymbol ebenfalls auf an sich bekannte Weise erfasst werden, wobei unterschiedliche Eingabevorrichtungen verwendet werden können. Beispielsweise kann ein Touchscreen verwendet werden, eine andere berührungsempfindliche Oberfläche, wie etwa ein Touchpad, eine Maus oder ein Joystick, ein Dreh-Drück-Steller, Tastschalter oder ein anderes Eingabegerät. Alternativ oder zusätzlich kann eine Steuerung mittels Gesten, die in einem dreidimensionalen Raum erfasst werden, oder eine Sprachbedienung vorgesehen sein.

Bei einer Ausführung der Erfindung wird das Programmsymbol zu Beginn der Hinzufügegeste ausgewählt, etwa durch eine Berührung einer berührungsempfindlichen Oberfläche an einer dem Programmsymbol zugeordneten Position. Zudem kann vorgesehen sein, dass die Auswahl des Programmsymbols erst nach dem Ablauf einer bestimmten Dauer der Berührung erfolgt. Es wird eine Bewegung entlang einer Verschiebungstrajektorie erfasst, indem die Position der Berührung der Oberfläche verändert wird, ohne dabei die Berührung zu unterbrechen, während das zu Beginn ausgewählte Programmsymbol weiterhin ausgewählt bleibt. Die Verschiebungstrajektorie endet bei dieser Ausführung bei einer dem Direktzugriffsbereich zugeordneten Endposition. Insbesondere kann anhand der Endposition eine Position innerhalb des Direktzugriffsbereichs definiert werden, sodass das ausgewählte Programmsymbol nicht nur dem Direktzugriffsbereich zugeordnet wird, sondern ferner eine Anordnung innerhalb des Direktzugriffsbereichs konfiguriert werden kann.

Während die Hinzufügegeste durchgeführt wird, das heißt insbesondere während der Durchführung der Bewegung entlang der Verschiebungstrajektorie, wird eine Verschiebungsanimation erzeugt. Dies geschieht auf an sich bekannte Weise, wobei eine Verschiebung des ausgewählten Programmsymbols entlang der Verschiebungstrajektorie dargestellt wird. Dabei kann vorgesehen sein, dass das Programmsymbol von seiner ursprünglichen Position weg bewegt wird oder dass eine veränderte Darstellung des Programmsymbols, etwa als Kopie des Programmsymbols, erzeugt und verschoben wird, während das Programmsymbol selbst in seiner ursprünglichen Stelle verbleibt. Ferner kann vorgesehen sein, dass die Kopie des Programmsymbols in einer veränderten Weise dargestellt ist, beispielsweise mit einer besonderen Helligkeit oder Transparenz, durch die sie als verschiebbare Darstellung oder Kopie erkennbar ist. Durch die Verschiebungsanimation erhält der Nutzer während der Durchführung der Hinzufügegeste eine leicht erfassbare Rückmeldung über den Status der Gestendurchführung.

Die Verschiebungsanimation umfasst also eine Bewegung des Programmsymbols. Ferner ist eine Verkleinerung des Programmsymbols umfasst, welche insbesondere zumindest für einen Abschnitt der Verschiebungstrajektorie kontinuierlich erfolgt. Bei der Verkleinerung erfolgt eine Skalierung, insbesondere anhand eines Skalierungsfaktors, der die Größe des dargestellten Programmsymbols definiert und auf verschiedene Weisen gebildet werden kann. Insbesondere kann eine Skalierung unter Beibehaltung der Größenverhältnisse der Darstellung des Programmsymbols erfolgen, das heißt mit einem gleichmäßigen Skalierungsfaktor in zwei linear unabhängige Richtungen. Alternativ kann die Skalierung in anderer Weise erfolgen, beispielsweise mit einer Stauchung in eine Richtung.

Der Skalierungsfaktor ist, um eine kontinuierliche Verkleinerung zu erzeugen, so gebildet, dass er stetig verläuft. Insbesondere kann er stetig differenzierbar gebildet sein. Er wird dabei in Abhängigkeit von einem weiteren Parameter gebildet, etwa in Abhängigkeit von der Zeit, sodass die Verschiebungsanimation eine sich dynamisch mit der Zeit verändernde Verkleinerung des Programmsymbols umfasst, oder in Abhängigkeit von der Position des Programmsymbols.

Bei einer Ausbildung des Verfahrens wird die kontinuierliche Verkleinerung des Programmsymbols anhand eines Skalierungsfaktor erzeugt, der anhand einer stetigen Funktion in Abhängigkeit von einer Position des Programmsymbols erzeugt wird.

Beispielsweise kann sich der Skalierungsfaktor unterschiedlich schnell verändern, beispielsweise umso schneller je näher das Programmsymbol an dem Direktzugriffsbereich angeordnet ist. Ferner kann der Skalierungsfaktor so gebildet sein, dass das Programmsymbol umso stärker verkleinert wird, je geringer sein Abstand zu dem Direktzugriffsbereich ist. Umgekehrt kann ferner vorgesehen sein, dass bei einem wachsenden Abstand zu dem Direktzugriffsbereich eine Vergrößerung des Programmsymbols ausgegeben wird, beispielsweise wenn die Verschiebungstrajektorie zunächst eine Annäherung an den Direktzugriffsbereich umfasst, wobei eine Verkleinerung durchgeführt wird, und anschließend der Abstand wieder größer wird, wobei eine Vergrößerung durchgeführt wird, insbesondere bis hin zur ursprünglichen Größe vor Erfassung der Hinzufügegeste.

Bei einer weiteren Ausbildung des erfindungsgemäßen Verfahrens wird das verkleinerte Programmsymbol im Anschluss an die Hinzufügegeste durch das Direktzugriffsobjekt ersetzt, wobei das Direktzugriffsobjekt eine vereinfachte Darstellung gegenüber dem Programmsymbol umfasst. Auf diese Weise kann das Direktzugriffsobjekt so erzeugt werden, dass es auch bei einer platzsparenden, kleinen Darstellung für den Nutzer gut erfassbar ist.

Insbesondere kann das Direktzugriffsobjekt so gebildet sein, dass es einer vereinfachten Version des Programmsymbols entspricht. Beispielsweise können Elemente des Programmsymbols, wenn sie nach der Verkleinerung eine bestimmte Größe unterschreiten, durch eine vereinfachte Darstellung ersetzt werden.

Bei einer weiteren Ausbildung umfasst die Bedienoberfläche eine Schaltfläche und anhand einer Betätigung der Schaltfläche wird der Standardmodus oder der Konfigurationsmodus aktiviert. Insbesondere ist dabei vorgesehen, dass beim Betätigen der Schaltfläche, während der Standardmodus aktiviert ist, der Konfigurationsmodus aktiviert wird und umgekehrt. Dadurch kann vorteilhafterweise besonders einfach zwischen den vorgesehenen Modi für die Bedienoberfläche gewechselt werden.

Beispielsweise kann eine Schaltfläche vorgesehen sein, die auf an sich bekannte Weise betätigt werden kann, beispielsweise durch eine Berührung einer berührungsempfindlichen Oberfläche an einer der Schaltfläche vorgesehenen Position, eine Auswahl mittels einer Eingabevorrichtung oder mittels eines geeigneten analogen Schalters. Die Schaltfläche kann dabei eine Beschriftung aufweisen oder in anderer Weise gekennzeichnet sein.

Bei einer Weiterbildung wird eine von dem Direktzugriffsbereich ausgehende Wischgeste erfasst und in Abhängigkeit von einer Richtung der Wischgeste wird der Standardmodus oder der Konfigurationsmodus aktiviert. Dadurch wird vorteilhafterweise ein besonders intuitiver Wechsel zwischen den Modi ermöglicht.

Insbesondere kann die Wischgeste dabei so ausgebildet sein, dass durch die Wischgeste ein "Verschieben" des Konfigurationsbereichs dargestellt wird, beispielsweise indem ein am Rand der Bedienoberfläche dargestelltes Objekt in die Bedienoberfläche hinein, das heißt zur Mitte der Bedienoberfläche hin, gezogen wird. Die Bedienoberfläche kann in diesem Fall so dargestellt werden, dass der Konfigurationsbereich im Standardmodus zumindest teilweise außerhalb des ausgegebenen Bereich der Bedienoberfläche angeordnet ist. Durch die Wischgeste zum Aktivieren des Konfigurationsmodus wird dieser zunächst nicht sichtbarer Teil des Konfigurationsbereichs in die Anzeige hineingezogen, wobei insbesondere zumindest ein Teil der Darstellung der Bedienoberfläche im Standardmodus überdeckt wird. Umgekehrt kann in diesem Fall ausgehend von dem Konfigurationsmodus ein Wechsel in den Standardmodus vorgenommen werden, indem die Wischgeste für den Konfigurationsbereich so durchgeführt wird, dass eine Verschiebung aus der dargestellten Bedienoberfläche hinaus erfolgt, insbesondere umgekehrt zur Richtung des Hineinziehens zum Aktivieren des Konfigurationsmodus.

Bei einer Ausbildung wird bei einem Übergang zwischen dem Standardmodus und dem Konfigurationsmodus eine Übergangsanimation erzeugt und ausgegeben. Der Nutzer erhält dadurch vorteilhafterweise eine direkte Rückmeldung, wobei der Übergang zwischen den Modi als Prozess dargestellt wird, statt einen plötzlichen Wechsel mit einer abrupten Veränderung der Bedienoberfläche auszugeben.

Die Übergangsanimation kann in Abhängigkeit von einer Betätigung einer Schaltfläche und/oder anhand einer Wischgeste für den Wechsel zwischen dem Standardmodus und dem Konfigurationsmodus erzeugt werden. Insbesondere kann die Übergangsanimation während der Durchführung einer entsprechenden Wischgeste sowie in Abhängigkeit von deren Ausführung gebildet werden, beispielsweise anhand der Richtung und Geschwindigkeit der Wischgeste.

Dabei kann zudem vorgesehen sein, dass eine Verschiebung des Konfigurationsbereichs von außen in den dargestellten Bereich der Bedienoberfläche hinein beziehungsweise umgekehrt aus diesem Bereich heraus dargestellt wird. Dies kann insbesondere während der Ausführung einer Wischgeste erfolgen, die Übergangsanimation kann jedoch auch durch ein Betätigen einer Schaltfläche ausgelöst werden oder eine nicht vollständig durchgeführte Wischgeste kann vervollständigt werden, indem die Verschiebung des Konfigurationsbereichs fertig durchgeführt wird.

Alternativ oder zusätzlich kann die Übergangsanimation weitere Elemente umfassen, welche nach an sich bekannter Weise gebildet werden. Beispielsweise kann ein schrittweises Überblenden der Bedienoberfläche ausgegeben werden oder Elemente des Konfigurationsbereichs können auf verschiedene Weise erscheinen beziehungsweise verschwinden.

Bei einer weiteren Ausbildung wird, wenn der Konfigurationsmodus aktiviert ist, der Konfigurationsbereich gegenüber weiteren Bereichen der Bedienoberfläche hervorgehoben dargestellt. Auf diese Weise können einem Nutzer vorteilhafterweise die Konfigurationsmöglichkeiten besonders deutlich ausgegeben werden.

Insbesondere kann die Hervorhebung dadurch erfolgen, dass andere Bereiche der Bedienoberfläche verändert dargestellt werden, beispielsweise indem sie in den Hintergrund gerückt dargestellt werden. Beispielsweise können weitere Elemente der Bedienoberfläche, die etwa neben dem Konfigurationsbereich sichtbar sind, mit einer veränderten Helligkeit oder gegenüber der Konfigurationsbereich perspektivisch verschoben dargestellt werden, insbesondere abgedunkelt und/oder mit einem perspektivisch dargestellten Abstand zum Konfigurationsbereich.

Bei einer Weiterbildung ist die Vielzahl der Programmsymbole in dem Konfigurationsbereich anhand einer Matrix angeordnet. Insbesondere werden dabei Reihen und/oder Spalten gebildet. Dadurch kann vorteilhafterweise eine besonders übersichtliche Ausgabe der Programmsymbole erfolgen. Die Anordnung kann ferner auf andere Weise erfolgen, beispielsweise benutzerdefiniert.

Bei einer Ausbildung wird bei der Hinzufügegeste in Abhängigkeit von der Position des Programmsymbols ein Platzhaltersymbol angezeigt. Dadurch kann vorteilhafterweise besonders leicht erfassbar ausgegeben werden, welcher Position das Programmsymbol aktuell zugeordnet ist.

Das Platzhaltersymbol kann sowohl innerhalb des Konfigurationsbereichs mit der Vielzahl der Programmsymbole angezeigt werden, als auch innerhalb des Direktzugriffsbereichs. Die Darstellung kann auf unterschiedliche, an sich bekannte Weisen erfolgen, beispielsweise durch ein von anderen Symbolen und Objekten unterscheidbares Symbol, zum Beispiel mit einer anderen Helligkeit oder einem besonderen Symbol, etwa einem Plus-Zeichen oder einem Pfeil.

Bei einer weiteren Ausbildung kann nach Abschluss der Verschiebung des Programmsymbols eine neue Anordnung der Vielzahl der Programmsymbole und/oder der Direktzugriffsobjekte dargestellt werden. Insbesondere kann die neue Anordnung bereits während der Verschiebung dargestellt werden. Dies ermöglicht eine Umordnung der Symbole nach den Vorstellungen des Nutzers. Beispielsweise kann das Programmsymbol an einer neuen Position innerhalb einer Matrix, an der die Vielzahl der Programmsymbole ausgerichtet ist, angeordnet sein, während die weiteren Programmsymbole optional neu angeordnet sein können, etwa durch eine Verschiebung. In ähnlicher Weise kann die Anordnung innerhalb des Direktzugriffsbereichs erfolgen, indem zunächst während der Durchführung der Hinzufügegeste ein Platzhaltersymbol in dem Direktzugriffsbereich dargestellt wird und anschließend ein Direktzugriffsobjekt erzeugt wird, welches an der Stelle des Platzhaltersymbols angeordnet ist.

Die Darstellung des Platzhaltersymbols während der Durchführung der Hinzufügegeste ermöglicht dem Nutzer eine Beurteilung einer geänderten Anordnung der Vielzahl der Programmsymbole im Konfigurationsbereich oder einer veränderten Anzeige der Direktzugriffsobjekte im Direktzugriffsbereich. Dabei kann am Ende der Verschiebung des Programmsymbols insbesondere ein "Einrasten" des verschobenen Programmsymbols dargestellt und eine Verschiebung des Programmsymbols zu der Position des Platzhaltersymbols ausgegeben werden.

Bei einer Weiterbildung umfasst der Direktzugriffsbereich zumindest ein Direktzugriffsobjekt und das zumindest eine Direktzugriffsobjekt ist zu einem mittleren Bereich des Direktzugriffsbereichs benachbart angeordnet. Insbesondere ist eine mittlere Position des Direktzugriffsbereichs definiert und die Direktzugriffobjekte werden so erzeugt, dass sie an dieser Position oder angrenzend an einen solchen Bereich ausgegeben werden. Dadurch kann vorteilhafterweise eine besonders übersichtliche Anordnung der Direktzugriffsobjekte sichergestellt werden.

Beispielsweise kann in dem mittleren Bereich des Direktzugriffsbereichs eine Schaltfläche angeordnet sein, die einen Wechsel zwischen dem Standardmodus und dem Konfigurationsmodus ermöglicht.

Bei einer weiteren Ausbildung weist der Direktzugriffsbereich zwei Bereiche auf und in jedem der Bereiche können bis zu fünf, bevorzugt bis zu drei Direktzugriffsobjekt angeordnet werden. Dadurch wird die Übersichtlichkeit der Anordnung der Direktzugriffsobjekt weiter verbessert.

Beispielsweise können die beiden Bereiche rechts und links neben der Mitte oder neben einem mittleren Bereich des Direktzugriffsbereichs ausgebildet sein. Zum Beispiel kann in der Mitte des Direktzugriffsbereichs eine Schaltfläche angeordnet sein, wobei rechts und links daneben die Bereiche angeordnet sind, in denen Direktzugriffsobjekte angeordnet sein können. Insbesondere erfolgt die Anordnung dieser Objekte zu dem mittleren Bereich hin, das heißt nach Art einer links- oder rechtsbündigen Anordnung.

Dabei kann zudem vorgesehen sein, dass die Anzahl der Direktzugriffsobjekte in dem ersten und zweiten Bereich symmetrisch ausgebildet ist, das heißt, die Direktzugriffsobjekt können automatisch so angeordnet werden, dass eine gleichmäßige Verteilung erfolgt. Alternativ kann eine asymmetrische Verteilung zugelassen sein, wenn der Nutzer dies anhand seiner Bedienhandlungen im Konfigurationsmodus so einstellt.

Bei einer Weiterbildung wird, wenn der Konfigurationsmodus aktiviert ist, für ein Direktzugriffsobjekt eine Entfernungsgeste erfasst und anhand der Entfernungsgeste wird das Direktzugriffsobjekt aus dem Direktzugriffsbereich entfernt. Dadurch können vorteilhafterweise nicht benötigte oder unerwünschte Direktzugriffsobjekt entfernt werden.

Beispielsweise kann die Entfernungsgeste analog zu der Hinzufügegeste so ausgebildet sein, dass sie eine Verschiebungstrajektorie ausgehend von der Position eines Direktzugriffsobjekt hin zu einer Position außerhalb des Direktzugriffsbereichs umfasst. Das heißt, ein Direktzugriffsobjekt kann entfernt werden, indem es aus dem dafür vorgesehenen Bereich hinaus verschoben wird.

Das Entfernen des Direktzugriffsobjekts kann ferner mittels einer Animation dargestellt werden, die beispielsweise ein Verschwinden des Direktzugriffsobjekt umfasst.

Erfindungsgemäß wird, wenn der Standardmodus aktiviert ist, eine Bedienabsicht erfasst und der Direktzugriffsbereich wird in Abhängigkeit von der Bedienabsicht angezeigt oder ausgeblendet. Dadurch kann vorteilhafterweise der Direktzugriffsbereich genau dann angezeigt werden, wenn er zur Bedienung benötigt wird, und er kann ausgeblendet werden, sodass eine größere Fläche zur Darstellung der Bedienoberfläche zur Verfügung steht.

Zum Erfassen der Bedienabsicht kann beispielsweise eine Annäherung eines Betätigungsobjekts an eine Anzeigefläche, auf der die Bedienoberfläche ausgegeben wird, erfasst werden. Zum Beispiel kann der Eintritt des Betätigungsobjekts in einen Detektionsbereich vor der Anzeigefläche erfasst werden. Ferner kann die Bedienabsicht anhand der Berührung eines Bedienelements erfasst werden. Es kann vorgesehen sein, dass die Darstellung der Bedienoberfläche auf verschiedene Weise verändert wird und beispielsweise vergrößerte Schaltflächen angezeigt werden.

Das erfindungsgemäße Bediensystem zum Bereitstellen einer Bedienschnittstelle umfasst eine Recheneinheit, durch die Grafikdaten einer Bedienoberfläche erzeugbar sind, wobei für die Bedienoberfläche ein Standardmodus und ein Konfigurationsmodus aktivierbar ist. Dabei umfasst die Bedienoberfläche, wenn der Standardmodus aktiviert ist, einen Direktzugriffsbereich. Die Bedienoberfläche umfasst, wenn der Konfigurationsmodus aktiviert ist, eine Darstellung des Direktzugriffsbereichs sowie einen Konfigurationsbereich. Dabei umfasst der Konfigurationsbereich eine Vielzahl von Programmsymbolen, die jeweils einem Anwendungsprogramm zugeordnet sind. Das Bediensystem umfasst ferner eine Ausgabeeinheit, durch welche die Bedienoberfläche ausgebbar ist, sowie eine Erfassungseinheit, durch die für ein Programmsymbol eine Hinzufügegeste erfassbar ist, wobei die Hinzufügegeste eine Zuordnung des Programmsymbols zu einer Position des Direktzugriffsbereichs umfasst. Dabei ist anhand der Hinzufügegeste ein Direktzugriffsobjekt, welches dem Anwendungsprogramm des Programmsymbols zugeordnet ist, für den Direktzugriffsbereich erzeugbar und anhand der Hinzufügegeste ist eine Anordnung des Direktzugriffsobjekts im Direktzugriffsbereich erzeugbar. Dabei ist während der Erfassung der Hinzufügegeste eine Verschiebungsanimation für das zugeordnete Programmsymbol erzeugbar, wobei die Verschiebungsanimation eine Bewegung des Programmsymbols entlang einer Verschiebungstrajektorie umfasst und während der Bewegung entlang zumindest eines Abschnitts der Verschiebungstrajektorie eine kontinuierliche Verkleinerung des Programmsymbols ausgebbar ist.

Das erfindungsgemäße Bediensystem ist insbesondere ausgebildet, das vorstehend beschriebene erfindungsgemäße Verfahren zu implementieren. Das Bediensystem weist somit dieselben Vorteile auf wie das erfindungsgemäße Verfahren.

Bei einer Ausbildung des erfindungsgemäßen Bediensystems sind die Ausgabeeinheit und die Erfassungseinheit von einem Touchscreen umfasst. Dadurch kann vorteilhafterweise eine besonders kompakte Bauweise sichergestellt und eine sehr einfache Bedienung ermöglicht werden.

Der Touchscreen umfasst insbesondere eine Anzeigefläche und eine ortsaufgelöste Berührungserfassungseinrichtung, durch welche die Position einer Berührung des Benutzers mit einem Bedienelement auf der Anzeigefläche bestimmbar ist. Diese Position kann einem Element der grafischen Bedienoberfläche zugeordnet werden und anhand der Berührung kann eine Auswahl, Markierung und/oder Betätigung des Elements erfolgen.

Bei einer weiteren Ausbildung umfasst das Bediensystem ferner eine Annäherungserfassungseinrichtung, mittels welcher eine Bedienabsicht des Nutzers anhand einer Annäherung eines Betätigungsobjekts an die Erfassungseinheit erfassbar ist. Beispielsweise wird eine Annäherung an eine Anzeigefläche erfasst, wobei insbesondere ein Eintritt des Betätigungsobjekts in einen Detektionsbereich vor der Anzeigefläche erfassbar ist. Das Betätigungsobjekt kann beispielsweise eine Hand oder eine Fingerspitze des Nutzers sein.

In Abhängigkeit von der detektierten Bedienabsicht des Nutzers kann die Bedienoberfläche verändert werden. Es können insbesondere Schaltflächen, Programmsymbole und/oder Direktzugriffsobjekt hervorgehoben dargestellt werden, damit der Nutzer schnell und intuitiv erkennt, welche grafischen Elemente betätigbar sind. Beispielsweise können die entsprechenden Elemente der Bedienoberfläche vergrößert dargestellt oder erst nach der Erfassung einer Bedienabsicht eingeblendet werden.

Die Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungsobjekt gestreuten und/oder reflektierten Anteils der Detektionsstrahlung umfassen. Sie kann insbesondere dazu ausgebildet sein, das Betätigungsobjekt in dem Detektionsbereich anhand der Intensität der empfangenen Detektionsstrahlung zu erkennen.

Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Des Weiteren kann eine Modulationsvorrichtung zum Modulieren der emittierten Detektionsstrahlung vorgesehen sein, sodass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Bediensystems und
- Figuren 2A bis 2I: zeigen Beispiele von Anzeigen, die bei der Ausführung eines Ausführungsbeispiels des erfindungsgemäßen Verfahrens erzeugt werden können.

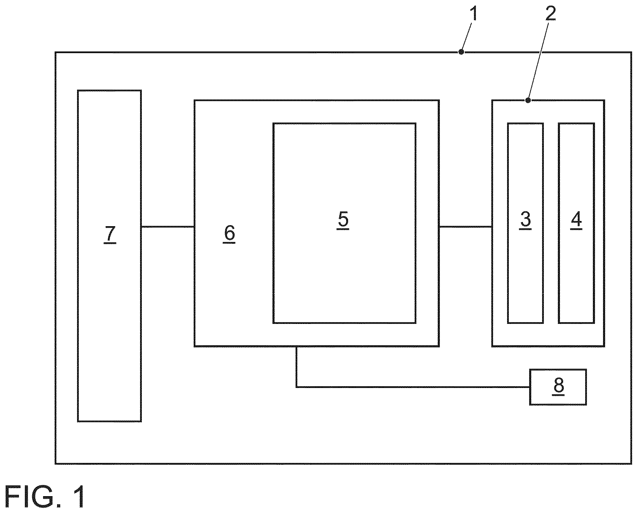

Mit Bezug zu Figur 1 wird ein Fahrzeug mit einem Ausführungsbeispiel des erfindungsgemäßen Bediensystems erläutert.

Ein Fahrzeug 1 umfasst eine Steuereinheit 6, die wiederum eine Recheneinheit 5 umfasst. Mit der Steuereinheit 6 sind ein Touchscreen 2, eine Annäherungserfassungseinheit 8 und eine Medienwiedergabeeinrichtung 7 gekoppelt.

Der Touchscreen 2 umfasst eine Ausgabeeinheit 4, bei dem Ausführungsbeispiel eine Anzeigefläche 4, und eine Erfassungseinheit 3, hier eine berührungsempfindliche Oberfläche 3. Beispielsweise kann die berührungsempfindliche Oberfläche 3 als über der Anzeigefläche 4 angeordnete Folie ausgebildet sein, mit welcher die Position einer Berührung eines Betätigungsobjekts detektiert werden kann. Bei dem Betätigungsobjekt handelt es sich insbesondere um die Fingerspitze eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 4 angezeigten grafischen Objekt zugeordnet werden. Des Weiteren kann die Dauer der Berührung bei einer bestimmten Position oder innerhalb eines bestimmten Bereichs erfasst werden.

Es können ferner Gesten erfasst werden, wobei eine zeitliche Veränderung der Berührung erfasst wird. Beispielsweise kann eine Geste eine Trajektorie umfassen, wobei das Betätigungsobjekt die berührungsempfindliche Oberfläche 3 an einer bestimmten Position berührt, anschließend seine Position entlang der Trajektorie ändert und die Berührung schließlich an einer weiteren Position gelöst wird. Eine Geste kann ferner eine Berührung an einer bestimmten Position für eine bestimmte Zeitdauer umfassen, beispielsweise indem zwischen einem kurzen Antippen und einer Berührung mit längerer Dauer (*Longpress*) unterschieden wird. Ferner können Gesten erkannt werden, bei denen die berührungsempfindliche Oberfläche 3 an mehreren Positionen gleichzeitig berührt wird, beispielsweise durch mehrere Finger des Nutzers, etwa in einem bestimmten oder in einem sich verändernden Abstand zueinander. Weitere Gesten können auf an sich bekannte Weise erfasst werden.

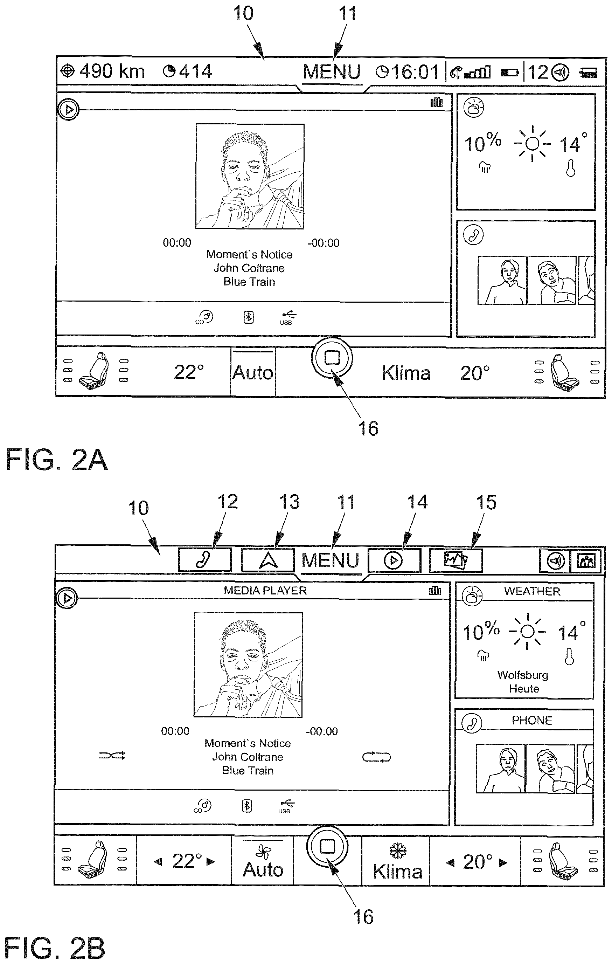

Mit Bezug zu den Figuren 2A bis 2I werden Beispiele von Anzeigen erläutert, die bei der Ausführung eines Ausführungsbeispiels des erfindungsgemäßen Verfahrens erzeugt werden können. Dabei wird insbesondere von dem oben mit Bezug zu Figur 1 erläuterten Ausführungsbeispiel des erfindungsgemäßen Bediensystems ausgegangen.

Bei dem Verfahren werden durch die Recheneinheit 5 Grafikdaten einer Bedienoberfläche erzeugt und an den Touchscreen 2 übertragen, wo die Bedienoberfläche durch die Anzeigefläche 4 ausgegeben wird.

Bei dem Ausführungsbeispiel ist vorgesehen, dass durch die Annäherungserfassungseinheit 8 eine Annäherung eines Betätigungsobjekts, insbesondere einer Hand eines Nutzers an den Touchscreen 2 erfassbar ist, wobei insbesondere detektiert wird, ob ein Betätigungsobjekt in einen Detektionsbereich vor der Anzeigefläche 4 eintritt. Ist dies der Fall, so wird dies als das Vorliegen einer Bedienabsicht interpretiert, während keine Bedienabsicht angenommen wird, wenn kein Betätigungsobjekt in dem Detektionsbereich erfasst wird. Alternativ oder zusätzlich kann vorgesehen sein, dass eine Berührung des Touchscreens 2 oder gegebenenfalls einer weiteren Bedienvorrichtung des Fahrzeugs 1 durch ein Betätigungsobjekt als Bedienabsicht erfasst wird.

Bei dem in Figur 2A gezeigten Fall wurde keine Bedienabsicht erfasst und die Bedienoberfläche wird daher so erzeugt, dass Schaltflächen lediglich angedeutet werden und verschiedene Informationen über die Arbeit des Systems besonders übersichtlich ausgegeben werden.

Bei dem in Figur 2A gezeigten Fall ist ferner der Standardmodus der Bedienoberfläche aktiviert. Die Bedienoberfläche umfasst am oberen Rand Bedienoberfläche einen Direktzugriffsbereich 10, in dem eine Schaltfläche 11 mit der Beschriftung "Menu" mittig angeordnet ist.

Die Bedienoberfläche umfasst ferner auf an sich bekannte Weise gebildete grafische Objekte, im hier beispielhaft dargestellten Fall einen Startbildschirm, wie er etwa nach dem Aktivieren des Systems angezeigt wird und/oder zu dem der Nutzer durch bestimmte Bedienhandlung immer wieder zurückkehren kann. Bei dem Ausführungsbeispiel ist zur Erfassung dieser Bedienhandlung eine Schaltfläche 16 vorgesehen, die als sogenannter *"Home-Button"* ausgeprägt ist. Der Nutzer kann durch eine Betätigung dieser Schaltfläche 16 stets zu einer Ansicht des Startbildschirms zurückkehren.

Der Startbildschirm umfasst Bereiche, die jeweils einem Anwendungsprogramm zugeordnet sind und in denen Ausgabedaten der jeweiligen zugeordneten Anwendungsprogramm ausgegeben werden, beispielsweise Ausgabedaten eines Anwendungsprogramms zum Abspielen von Mediendateien, die bei dem Ausführungsbeispiel durch die Medienwiedergabeeinrichtung 7 bereitgestellt werden. Diese Bereiche sind insbesondere auf an sich bekannte Weise als Kacheln oder *Widgets* des Startbildschirms ausgebildet.

Bei dem in Figur 2B gezeigten Fall wurde, während weiterhin der Standardmodus für die Bedienoberfläche aktiviert ist, der Eintritt eines Fingers des Nutzers in den Detektionsbereich der Annäherungserfassungseinheit 8 erfasst und dies wurde als Vorliegen einer Bedienabsicht interpretiert. Die Bedienoberfläche ist gegenüber dem in Figur 2A dargestellten Fall so verändert, dass Schaltflächen, durch deren Betätigung der Nutzer Eingaben vornehmen kann, sichtbar dargestellt werden. Beispielsweise werden anhand einer Umrandung der Schaltflächen angezeigt, während ohne eine erfasste Bedienabsicht (siehe Figur 2A) lediglich Symbole an den Positionen der Schaltflächen angezeigt werden.

Ferner werden in dem Direktzugriffsbereich 10 nun Direktzugriffsobjekte 12, 13, 14, 15 angezeigt, die rechts und links an die mittig angeordnete Schaltfläche 11 nebeneinander angrenzend angeordnet sind. Die Direktzugriffsobjekte 12, 13, 14, 15 sind als Schaltflächen ausgebildet und durch Betätigen eines Direktzugriffsobjekts 12, 13, 14, 15 kann der Nutzer jeweils zugeordnete Funktionen aktivieren oder Anwendungsprogramme aufrufen, für die im übrigen Bereich der Bedienoberfläche Ausgaben angezeigt werden können. Insbesondere werden mittels der Direktzugriffsobjekte 12, 13, 14, 15 aufgerufene Anwendungsprogramme in einer Vollbildansicht auf der Bedienoberfläche ausgegeben.

Bei weiteren Ausführungsbeispielen ist keine Annäherungserfassungseinheit 8 vorgesehen. Stattdessen kann eine Annäherung beziehungsweise eine Bedienabsicht des Nutzers erfasst werden, wenn eine Berührung der berührungsempfindlichen Oberfläche 3 des Touchscreens 2 und/oder gegebenenfalls einer anderen Bedienungsvorrichtung erfasst wird. Ferner kann das Bediensystem ohne eine solche Erfassung der Bedienabsicht des Nutzers ausgeführt werden, wobei in diesem Fall der in Figur 2A gezeigte Fall typischerweise nicht vorgesehen ist, sondern stets von einer Bedienabsicht ausgegangen wird.

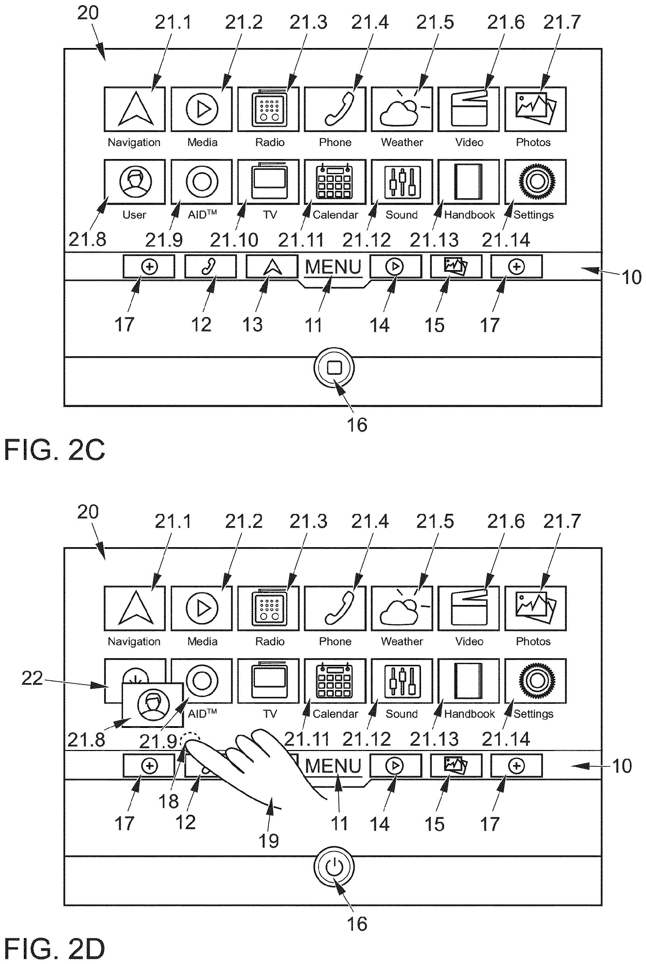

Bei dem in Figur 2C gezeigten Fall wurde der Konfigurationsmodus für die Bedienoberfläche aktiviert. Dies kann bei dem Ausführungsbeispiel auf verschiedene Weisen erfolgen: Der Nutzer kann beispielsweise die mittig im Direktzugriffsbereich 10 angeordnete Schaltfläche 11 "Menu" betätigen. Alternativ oder zusätzlich kann eine Wischgeste ausgehend von dem Direktzugriffsbereich 10 nach unten, das heißt zur Mitte der Bedienoberfläche hin, erfasst werden und die Aktivierung des Konfigurationsmodus auslösen.

Insbesondere ist dabei vorgesehen, dass während des Übergangs von dem Standardmodus zu dem Konfigurationsmodus eine Übergangsanimation ausgegeben wird, wobei der in Figur 2C gezeigten Konfigurationsbereich 20 von oben über die weiteren Elemente der Bedienoberfläche geschoben wird. Die Darstellung erfolgt dabei so, dass eine Verschiebung des Direktzugriffsbereichs 10 von oben herab dargestellt wird und der Konfigurationsbereich 20 allmählich aus dem nicht sichtbaren Bereich oberhalb der angezeigten Bedienoberfläche hervor sichtbar wird, bis er zur vollen Ausdehnung in den sichtbaren Bereich der ausgegebenen Bedienoberfläche eingetreten ist.

Bei dem Ausführungsbeispiel ist vorgesehen, dass, wenn der Wechsel zu dem Konfigurationsmodus anhand einer Wischgeste ausgelöst wird, die Übergangsanimation in Abhängigkeit von dem Ablauf der Wischgeste gebildet wird. Die Darstellung erfolgt in diesem Fall so, dass der Direktzugriffsbereich 10 so verschoben wird, dass er der Position des Fingers auf der berührungsempfindlichen Oberfläche 3 folgt. Dabei ist insbesondere vorgesehen, dass, wenn die Berührung vor dem Erreichen der maximalen Ausdehnung des Konfigurationsbereich 20 gelöst wird, die Übergangsanimation automatisch bis zum vollständigen Wechsel in den Konfigurationsmodus ausgeführt wird, wenn die Wischgeste für eine Länge oberhalb eines Schwellenwerts ausgeführt wurde. Ferner ist vorgesehen, dass beim Betätigen der Schaltfläche 11 "Menu" die Übergangsanimation automatisch erzeugt wird. Bei weiteren Ausführungsbeispielen können alternativ oder zusätzlich andere Übergangsanimationen vorgesehen sein.

Ferner ist bei dem Ausführungsbeispiel vorgesehen, dass im Konfigurationsmodus der Konfigurationsbereich 20 gegenüber anderen Elementen der Bedienoberfläche hervorgehoben dargestellt ist. Dieser folgt insbesondere durch eine Abdunkelung der weiteren Bereiche der Bedienoberfläche, während der Konfigurationsbereich 20 mit der gleichen Helligkeit, den gleichen Kontrast und Farbschema dargestellt wird wie die Bedienoberfläche im Standardmodus. Alternativ oder zusätzlich kann vorgesehen sein, dass weitere Elemente der Bedienoberfläche gegenüber dem Konfigurationsbereich 20 verkleinert, dunkler oder heller, in einer veränderten Farbwahl oder Sättigung, perspektivisch nach hinten verschoben, teilweise oder vollständig ausgeblendet oder auf andere Weise verändert dargestellt werden. Alternativ oder zusätzlich kann ferner vorgesehen sein, dass die Darstellung des Konfigurationsbereichs 20 auf besonders hervorgehobene Weise erfolgt, beispielsweise mittels einer gegenüber der Bedienoberfläche im Standardmodus höheren Helligkeit, einer anderen Farbwahl und/oder weiteren besonderen Merkmalen der Gestaltung. In weiteren Ausführungsbeispielen können andere an sich bekannte Weisen der Darstellung verwendet werden, um eine Hervorhebung des Konfigurationsbereichs 20 gegenüber dem Rest der Bedienoberfläche zu erreichen.

Der Konfigurationsbereich 20 umfasst eine Vielzahl von Programmsymbolen 21.1 bis 21.14, die in Reihen und Spalten entlang einer Matrix angeordnet sind. Bei weiteren Ausführungsbeispielen kann eine andere Anordnung vorgesehen sein. Die Programmsymbole 21.1 bis 21.14 sind Anwendungsprogrammen zugeordnet, die durch die Recheneinheit 5 ausgeführt werden können und beispielsweise zur Steuerung weiterer Einrichtungen des Fahrzeugs 1 verwendet werden können, bei dem Ausführungsbeispiel etwa der Medienwiedergabeeinrichtung 7.

Bei dem Ausführungsbeispiel ist ferner vorgesehen, dass, wenn der Konfigurationsmodus aktiviert ist, der gegenüber dem Standardmodus verschobene Direktzugriffsbereich 10 mit der Schaltfläche 11 "Menu" und den Direktzugriffsobjekten 12, 13, 14, 15 angezeigt wird. Zusätzlich dazu werden Platzhaltersymbole 17 angrenzend an die jeweils äußeren Direktzugriffsobjekte 12, 13, 14, 15 angezeigt. Dem Nutzer wird dadurch verdeutlicht, an welchen Positionen freie Plätze für weitere Direktzugriffsobjekte 12, 13, 14, 15 vorhanden sind.

Bei dem Ausführungsbeispiel ist vorgesehen, dass bis zu drei Direktzugriffsobjekte 12, 13, 14, 15 jeweils rechts und links neben der Schaltfläche 11 "Menu" angeordnet werden können. In weiteren Ausführungsbeispielen kann eine andere Anzahl vorgesehen sein, beispielsweise vier oder fünf.

Bei dem in Figur 2D gezeigten Fall berührt der Finger einer Hand 19 des Nutzers die berührungsempfindliche Oberfläche 3 an einer Position 18. Der hier gezeigten Fall repräsentiert einen Zustand, bei dem gerade eine Hinzufügegeste ausgeführt wird. Die Hinzufügegeste hat bei dem in Figur 2C links unten angeordneten Programmsymbol 21.8 begonnen und der Finger wurde, ohne die Berührung zu unterbrechen, an die in Figur 2D gezeigte Position 18 verschoben. Das Programmsymbol 21.8 ist hier gegenüber der Darstellung in Figur 2C verschoben und an seiner ursprünglichen Position wird ein Platzhaltersymbol 22 angezeigt.

Bei dem Ausführungsbeispiel ist vorgesehen, dass ein Programmsymbol 21.1 bis 21.14, während es verschoben wird, zur Position 18 der Berührung der berührungsempfindlichen Oberfläche 3 versetzt dargestellt wird, sodass das Programmsymbol 21.1 bis 21.14 für den Nutzer sichtbar ist, während er die Hinzufügegeste ausführt.

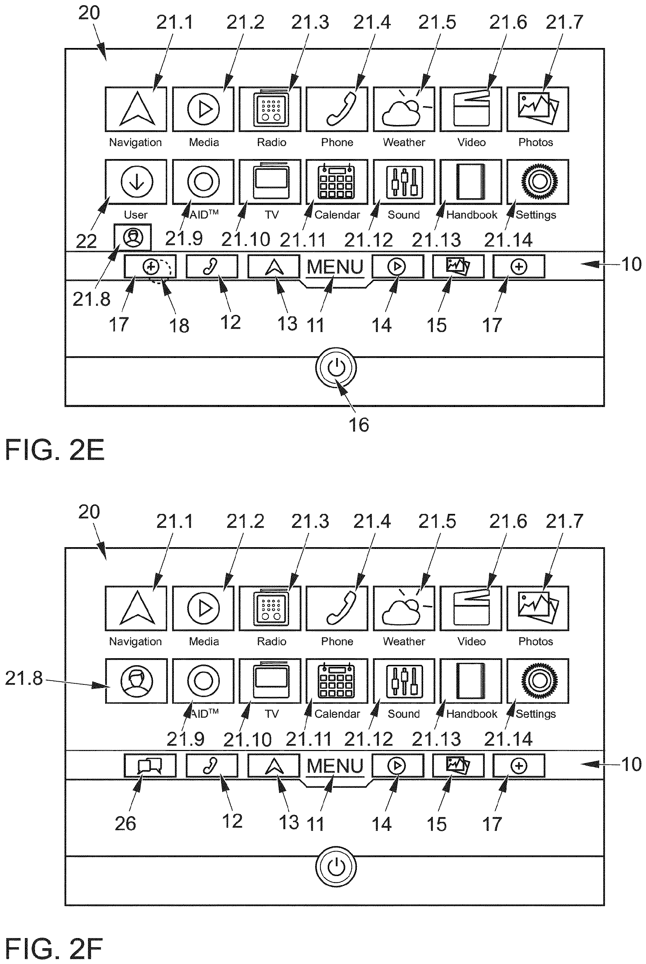

Bei dem in Figur 2E gezeigten Fall wurde die Hinzufügegeste gegenüber dem in Figur 2D gezeigten Fall weiter durchgeführt und die Position der Berührung 18 befindet sich im Direktzugriffsbereich 10. Das dargestellte Programmsymbol 21.8 wird nunmehr verkleinert dargestellt.

Erfindungsgemäß erfolgt der Übergang von der Darstellung des ursprünglichen Programmsymbols 21.8, wie bei dem in Figur 2D gezeigten Fall, zu der verkleinerten Darstellung, wie bei dem in Figur 2E gezeigten Fall, durch eine Skalierung. Diese Verkleinerung verläuft in einem bestimmten Bereich der Verschiebung kontinuierlich, das heißt, das Programmsymbol 21.8 wird nicht durch einen unstetigen Übergang verkleinert, das heißt durch eine verkleinerte Version des Programmsymbols 21.8 ersetzt, sondern es wird eine stetige Reduzierung der Symbolgröße dargestellt, insbesondere anhand eines Skalierungsfaktors, der in Abhängigkeit von der Zeit verändert wird.

Die Verkleinerung kann dabei anhand einer in Abhängigkeit von der Zeit veränderlichen Skalierung erfolgen oder die Skalierung kann von der Position 18 der Berührung abhängen, beispielsweise um das Programmsymbol 21.8 umso mehr zu vergrößern, je geringer die Entfernung zwischen der Position 18 der Berührung und dem Direktzugriffsbereich 10 ist. Bei dem Ausführungsbeispiel ist vorgesehen, dass eine rasche Verkleinerung des Programmsymbols 21.8 angezeigt wird, sobald die Position 18 in den Direktzugriffsbereich 10 eintritt. Optional kann vorgesehen sein, dass, wenn die Position 18 der Berührung den Direktzugriffsbereich 10 wieder verlässt, die Skalierung rückgängig gemacht und das Programmsymbol 21.8 wieder vergrößert wird, wobei insbesondere diese Vergrößerung ebenso schnell wie zuvor die Verkleinerung ablaufen kann.

Insbesondere kann vorgesehen sein, dass bei der Verkleinerung eine Vereinfachung des Programmsymbols 21.8 vorgenommen wird, wobei Details, welche nach der Verkleinerung eine bestimmte Größe unterschreiten, durch vereinfachte Elemente der Darstellung ersetzt werden.

Bei dem in Figur 2F gezeigten Fall wurde die Hinzufügegeste beendet, indem die Berührung der berührungsempfindlichen Oberfläche 3 beendet wurde, das heißt, der Finger der Hand 19 wurde abgehoben. Anstelle des in Figur 2E gezeigten Platzhaltersymbols 17 wird nun im Direktzugriffsbereich 10 ein neues Direktzugriffsobjekt 26 angezeigt, das dem gleichen Anwendungsprogramm zugeordnet ist wie das zuvor verschobene Programmsymbol 21.8.

Bei dem Ausführungsbeispiel ist das Direktzugriffsobjekt 26 von der Darstellung des Programmsymbols 21.8 verschieden. Bei weiteren Ausführungsbeispielen kann vorgesehen sein, dass das Direktzugriffsubjekt 26 als verkleinerte Darstellung des Programmsymbols 21.8 gebildet wird, wobei ferner eine Vereinfachung der Darstellung, insbesondere kleiner Details, erfolgen kann. Die Darstellung des neuen Direktzugriffsobjekts 26 kann ferner eine Darstellung eines Ausschnitts des verschobenen Programmsymbols 21.8 umfassen.

Wie in den Figuren 2E und 2F gezeigt, wurde bei dem Ausführungsbeispiel die Hinzufügegeste an der Position des linken Platzhaltersymbols 17 innerhalb des Direktzugriffsbereichs 10 beendet und das neue Direktzugriffsobjekt 26 an dieser Endposition erzeugt. In weiteren Ausführungsbeispielen kann vorgesehen sein, dass die Endposition der Hinzufügegeste an einer beliebigen Position innerhalb des Direktzugriffsbereichs angeordnet sein kann. Insbesondere kann unterschieden werden, ob die Hinzufügegeste links oder rechts von der durch die Schaltfläche 11 "Menu" markierten Mitte des Direktzugriffsbereichs 10 endet, wobei das neue Direktzugriffsobjekt 26 entsprechend links oder rechts von der Mitte des Direktzugriffsbereichs 10 angeordnet wird.

Bei dem Ausführungsbeispiel ist ferner vorgesehen, dass ein Direktzugriffsobjekt 12, 13, 14, 15, 26 aus dem Direktzugriffsbereich 20 entfernt werden kann. Dies ist insbesondere im Konfigurationsmodus möglich. Dazu kann eine Entfernungsgeste erfasst werden, die insbesondere analog zu der oben für die Hinzufügegeste beschriebenen Verschiebung des Programmsymbols 21.8 gebildet ist. Das Direktzugriffsobjekt 12, 13, 14, 15, 26, das durch die Entfernungsgeste aus dem Direktzugriffsbereich 20 entfernt werden soll, wird ausgewählt, insbesondere durch eine Berührung. Anschließend wird, ohne die Berührung zu lösen, eine Verschiebung durchgeführt, wobei die Position 18 der Berührung auf der berührungsempfindlichen Oberfläche 3 so verändert wird, dass eine Verschiebung aus dem Direktzugriffsbereich 10 heraus durchgeführt wird. Um die Entfernungsgeste zu beenden, wird die Berührung an einer Position 18 außerhalb des Direktzugriffsbereichs 20 gelöst. Anschließend wird das Direktzugriffsobjekt 12, 13, 14, 15, 26 nicht mehr im Direktzugriffsbereich angezeigt, sondern es kann beispielsweise ein Platzhalter 17 angezeigt werden. Insbesondere ist vorgesehen, dass die Anordnung der verbleibenden Direktzugriffsobjekte 12, 13, 14, 15, 26 so verändert wird, dass sie aneinander angrenzend nebeneinander und insbesondere an der Mitte des Direktzugriffsbereichs 10 angrenzend dargestellt werden. Ferner kann eine Entfernungsanimation vorgesehen sein, beispielsweise ein Verschwinden, "Verpuffen" oder Ausblenden des zu entfernenden Direktzugriffsobjekt 12, 13, 14, 15, 26.

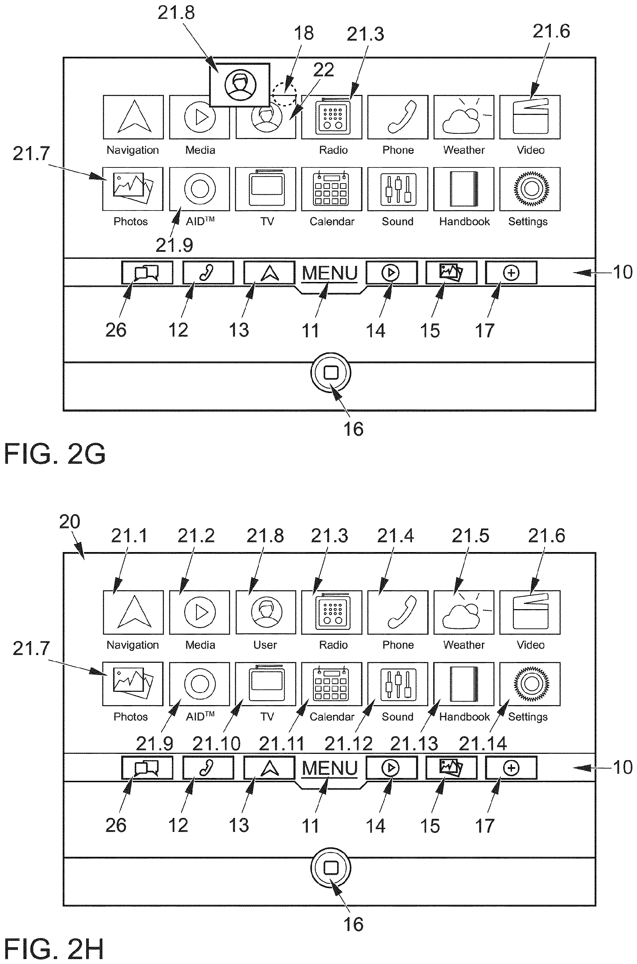

Bei dem in Figur 2G gezeigten Fall wurde die Hinzufügegeste nicht bei dem Direktzugriffsbereich 10 beendet, sondern das Programmsymbol 21.8 wurde so verschoben, dass es nun oberhalb einer Position der ersten Reihe der im Konfigurationsbereich 20 dargestellten Programmsymbole 21.1 bis 21.14 angeordnet ist. Eine solche Geste wird als Umordnungsgeste interpretiert, das heißt, das verschobene Programmsymbol 21.8 wird nicht dem Direktzugriffsbereich 10 zugeordnet und es wird kein neues Direktzugriffsobjekt 26 erzeugt, sondern die Anordnung der Programmsymbole 21.1 bis 21.14 innerhalb des Konfigurationsbereichs 20 wird verändert.

Bei dem Ausführungsbeispiel wird während der Umordnungsgeste eine laufend aktualisierte, temporäre Vorschau der neuen Anordnung erzeugt, die zeigt, wie die Programmsymbole 21.1 bis 21.14 angeordnet würden, wenn die Umordnungsgeste bei der aktuellen Position 18 beendet würde, insbesondere durch Abheben des Fingers von der berührungsempfindlichen Oberfläche 3. Das heißt, wenn die Position 18 der Berührung ein Programmsymbol 21.1 bis 21.14 erreicht, wird die Darstellung der Programmsymbole 21.1 bis 21.14 so verändert, dass das verschobene Programmsymbol 21.8 an der jeweiligen Stelle der aktuellen Position 18 angezeigt wird und die anderen Programmsymbole 21.1 bis 21.14 verschoben dargestellt werden. Alternativ können andere Arten der Umordnung dargestellt werden, beispielsweise indem die Schaltfläche Programmsymbole 21.1 bis 21.14 an der jeweiligen Position 18 mit der ursprünglichen Position des Programmsymbols 21.8 vertauscht wird. Ferner kann zusätzlich vorgesehen sein, dass die umgeordneten Programmsymbole 21.1 bis 21.14 der Vorschau-Darstellung während der Umordnungsgeste verändert dargestellt werden, beispielsweise in einer bestimmten Helligkeit, sodass der Nutzer leicht zwischen der normalen Anordnung der Programmsymbole 21.1 bis 21.14 und der Vorschau-Darstellung unterscheiden kann.

Bei dem in Figur 2H gezeigten Fall wurde die Umordnungsgeste bei der in Figur 2G gezeigten Position 18 beendet und die Anordnung der Programmsymbole 21.1 bis 21.14 wurde so verändert, dass die tatsächliche Anordnung der in Figur 2G gezeigten Vorschau-Darstellung entspricht.

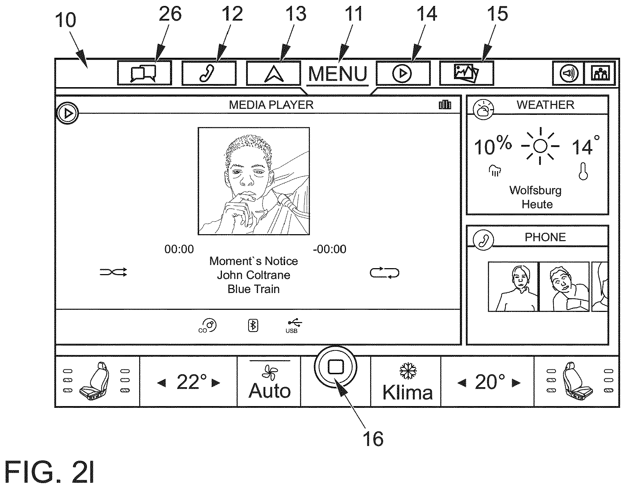

Bei dem in Figur 2I gezeigten Fall wurde der Standardmodus aktiviert. Bei dem Ausführungsbeispiel ist vorgesehen, dass der Übergang von dem Konfigurationsmodus zu dem Standardmodus umgekehrt verläuft wie die oben erläuterte Aktivierung des Konfigurationsmodus. Insbesondere kann eine Betätigung der Schaltfläche 11 "Menu" des Direktzugriffsbereichs 10 den Übergang auslösen. Alternativ oder zusätzlich kann zur Aktivierung eine Wischgeste vorgesehen sein, die eine Bewegung in Richtung des oberen Randes der Bedienoberfläche umfasst. Insbesondere kann dabei eine Übergangsanimation erzeugt werden, die eine Verschiebung des Konfigurationsbereichs nach oben aus dem sichtbar dargestellten Bereich der Bedienoberfläche umfasst. Auch hier kann die Übergangsanimation während der Durchführung der Wischgeste so erzeugt werden, dass die Verschiebung synchron mit der Bewegung der Wischgeste erfolgt.

Die resultierende Darstellung der Bedienoberfläche umfasst, ähnlich dem in Figur 2B gezeigten Fall, einen Startbildschirm sowie am oberen Rand der Bedienoberfläche den Direktzugriffsbereich 10 als schmalen Streifen, wobei im mittleren Bereich die Schaltfläche 11 "Menu" und rechts und links daneben die Direktzugriffsobjekte 12, 13, 14, 15, 26 angeordnet sind.

Bei dem Ausführungsbeispiel ist ferner vorgesehen, dass, nachdem die Annäherungserfassungseinheit 8 für eine bestimmte Zeitdauer kein Betätigungsobjekt in ihrem Detektionsbereich erfasst hat, die angezeigte Bedienoberfläche analog zu dem in Figur 2A gezeigten Fall modifiziert wird, wobei die Direktzugriffsobjekte 12, 13, 14, 15, 26 ausgeblendet werden.

Bei weiteren Ausführungsbeispielen kann eine andere Anordnung des Direktzugriffsbereichs 10 innerhalb der Bedienoberfläche vorgesehen sein, beispielsweise an einem der anderen Ränder. In diesem Fall kann die Wischgeste zum Aktivieren des Konfigurationsmodus beziehungsweise des Standardmodus entsprechend modifiziert sein, und beispielsweise eine Bewegung von einem der anderen Ränder hin zur Mitte der Bedienoberfläche beziehungsweise umgekehrt zu dem jeweiligen Rand hin umfassen.

### Bezugszeichenliste

- 1: Fahrzeug
- 2: Touchscreen
- 3: Erfassungseinheit; berührungsempfindliche Oberfläche
- 4: Ausgabeeinheit; Anzeigefläche
- 5: Recheneinheit
- 6: Steuereinheit
- 7: Medienwiedergabeeinrichtung
- 8: Annäherungserfassungseinheit
- 10: Direktzugriffsbereich
- 11: Schaltfläche "Menu"
- 12, 13, 14, 15: Direktzugriffsobjekt
- 16: Schaltfläche "Home-Button"
- 17: Platzhaltersymbol (Direktzugriffsbereich)
- 18: Berührungsposition
- 19: Hand
- 20: Konfigurationsbereich
- 21.1 - 21.14: Programmsymbole
- 22: Platzhaltersymbol (Konfigurationsbereich)
- 26: Direktzugriffsobjekt (neu)

## Patentansprüche

1. Verfahren zum Bereitstellen einer Bedienschnittstelle, insbesondere in einem Fahrzeug, bei dem
Grafikdaten einer Bedienoberfläche erzeugt und ausgegeben werden; wobei
für die Bedienoberfläche ein Standardmodus oder ein Konfigurationsmodus aktivierbar ist; wobei,
wenn der Standardmodus aktiviert ist, die Bedienoberfläche einen Direktzugriffsbereich (10) umfasst; und,
wenn der Konfigurationsmodus aktiviert ist, die Bedienoberfläche einen Konfigurationsbereich (20) umfasst, wobei
der Konfigurationsbereich (20) eine Vielzahl von Programmsymbolen (21.1 bis 21.14) umfasst, die jeweils einem Anwendungsprogramm zugeordnet sind;
für ein Programmsymbol (21.1 bis 21.14) eine Hinzufügegeste erfasst wird, wobei die Hinzufügegeste eine Zuordnung des Programmsymbols (21.1 bis 21.14) zu einer Position des Direktzugriffsbereichs (10) umfasst; und
anhand der Hinzufügegeste ein Direktzugriffsobjekt (26), welches dem Anwendungsprogramm des Programmsymbols (21.1 bis 21.14) zugeordnet ist, für den Direktzugriffsbereich (10) erzeugt und anhand der Hinzufügegeste im Direktzugriffsbereich (10) angeordnet wird, wobei
während die Hinzufügegeste erfasst wird, eine Verschiebungsanimation für das zugeordnete Programmsymbol (21.1 bis 21.14) erzeugt wird, wobei
die Verschiebungsanimation eine Bewegung des Programmsymbols (21.1 bis 21.14) entlang einer Verschiebungstrajektorie umfasst,
**dadurch gekennzeichnet, dass**
während der Bewegung entlang zumindest eines Abschnitts der Verschiebungstrajektorie eine kontinuierliche Verkleinerung des Programmsymbols (21.1 bis 21.14) ausgegeben wird und,
wenn der Standardmodus aktiviert ist, eine Bedienabsicht erfasst wird und der Direktzugriffsbereich (10) in Abhängigkeit von der Bedienabsicht angezeigt oder ausgeblendet wird.

2. Verfahren gemäß Anspruch 1,
**dadurch gekennzeichnet, dass**
die kontinuierliche Verkleinerung des Programmsymbols (21.1 bis 21.14) anhand eines Skalierungsfaktors erzeugt wird, der anhand einer stetigen Funktion in Abhängigkeit von einer Position des Programmsymbols (21.1 bis 21.14) erzeugt wird.

3. Verfahren gemäß einem der vorhergehenden Ansprüche,
**dadurch gekennzeichnet, dass**
im Anschluss an die Hinzufügegeste das verkleinerte Programmsymbol (21.1 bis 21.14) durch das Direktzugriffsobjekt (26) ersetzt wird, wobei das Direktzugriffsobjekt (26) eine vereinfachte Darstellung gegenüber dem Programmsymbol (21.1 bis 21.14) umfasst.

4. Verfahren gemäß einem der vorhergehenden Ansprüche,
**dadurch gekennzeichnet, dass**
die Bedienoberfläche eine Schaltfläche (11) umfasst und anhand einer Betätigung der Schaltfläche (11) der Standardmodus oder der Konfigurationsmodus aktiviert wird.

5. Verfahren gemäß einem der vorhergehenden Ansprüche,
**dadurch gekennzeichnet, dass**
eine von dem Direktzugriffsbereich (10) ausgehende Wischgeste erfasst wird und in Abhängigkeit von einer Richtung der Wischgeste der Standardmodus oder der Konfigurationsmodus aktiviert wird.

6. Verfahren gemäß einem der vorhergehenden Ansprüche,
**dadurch gekennzeichnet, dass**
bei einem Übergang zwischen dem Standardmodus und dem Konfigurationsmodus eine Übergangsanimation erzeugt und ausgegeben wird.

7. Verfahren gemäß einem der vorhergehenden Ansprüche,
**dadurch gekennzeichnet, dass**,
wenn der Konfigurationsmodus aktiviert ist, der Konfigurationsbereich (20) gegenüber weiteren Bereichen der Bedienoberfläche hervorgehoben dargestellt wird.

8. Verfahren gemäß einem der vorhergehenden Ansprüche,
**dadurch gekennzeichnet, dass**
die Vielzahl der Programmsymbole (21.1 bis 21.14) in dem Konfigurationsbereich (20) anhand einer Matrix angeordnet ist.

9. Verfahren gemäß einem der vorhergehenden Ansprüche,
**dadurch gekennzeichnet, dass**
bei der Hinzufügegeste in Abhängigkeit von der Position des Programmsymbols (21.1 bis 21.14) ein Platzhaltersymbol (17; 22) angezeigt wird.

10. Verfahren gemäß einem der vorhergehenden Ansprüche,
**dadurch gekennzeichnet, dass**
der Direktzugriffsbereich (10) zumindest ein Direktzugriffsobjekt (12; 13; 14; 15; 26) umfasst und das zumindest eine Direktzugriffsobjekt (12; 13; 14; 15; 26) zu einem mittleren Bereich des Direktzugriffsbereichs (10) benachbart angeordnet ist.

11. Verfahren gemäß einem der vorhergehenden Ansprüche,
**dadurch gekennzeichnet, dass**
der Direktzugriffsbereich (10) zwei Bereiche aufweist und in jedem der Bereiche bis zu fünf, bevorzugt bis zu drei, Direktzugriffsobjekte (12; 13; 14; 15; 26) angeordnet werden können.

12. Verfahren gemäß einem der vorhergehenden Ansprüche,
**dadurch gekennzeichnet, dass**,
wenn der Konfigurationsmodus aktiviert ist, für ein Direktzugriffsobjekt (12; 13; 14; 15; 26) eine Entfernungsgeste erfasst wird und anhand der Entfernungsgeste das Direktzugriffsobjekt (12; 13; 14; 15; 26) aus dem Direktzugriffsbereich (10) entfernt wird.

13. Bediensystem zum Bereitstellen einer Bedienschnittstelle, umfassend
eine Recheneinheit (5), durch die Grafikdaten einer Bedienoberfläche erzeugbar sind; wobei,
für die Bedienoberfläche ein Standardmodus oder ein Konfigurationsmodus aktivierbar ist; wobei,
wenn der Standardmodus aktiviert ist, die Bedienoberfläche einen Direktzugriffsbereich (10) umfasst; und,
wenn der Konfigurationsmodus aktiviert ist, die Bedienoberfläche eine Darstellung des Direktzugriffsbereichs (10) sowie einen Konfigurationsbereich (20) umfasst, wobei
der Konfigurationsbereich eine Vielzahl von Programmsymbolen (21.1 bis 21.14) umfasst, die jeweils einem Anwendungsprogramm zugeordnet sind;
eine Ausgabeeinheit (4), durch welche die Bedienoberfläche ausgebbar ist; und eine Erfassungseinheit (3), durch die für ein Programmsymbol (21.1 bis 21.14) eine Hinzufügegeste erfassbar ist, wobei die Hinzufügegeste eine Zuordnung des Programmsymbols (21.1 bis 21.14) zu einer Position des Direktzugriffsbereichs (10) umfasst; wobei
anhand der Hinzufügegeste ein Direktzugriffsobjekt (26), welches dem Anwendungsprogramm des Programmsymbols (21.1 bis 21.14) zugeordnet ist, für den Direktzugriffsbereich (10) erzeugbar ist und anhand der Hinzufügegeste eine Anordnung des Direktzugriffsobjekts (26) im Direktzugriffsbereich (10) erzeugbar ist, wobei
während der Erfassung der Hinzufügegeste eine Verschiebungsanimation für das zugeordnete Programmsymbol (21.1 bis 21.14) erzeugbar ist, wobei
die Verschiebungsanimation eine Bewegung des Programmsymbols (21.1 bis 21.14) entlang einer Verschiebungstrajektorie umfasst,
**dadurch gekennzeichnet, dass**
während der Bewegung entlang zumindest eines Abschnitts der Verschiebungstrajektorie eine kontinuierliche Verkleinerung des Programmsymbols (21.1 bis 21.14) ausgebbar ist und,
wenn der Standardmodus aktiviert ist, eine Bedienabsicht erfassbar ist und der Direktzugriffsbereich (10) in Abhängigkeit von der Bedienabsicht anzeigbar oder ausblendbar ist.

14. Bediensystem gemäß Anspruch 13,
**gekennzeichnet durch**
eine Annäherungserfassungseinrichtung (8), mittels welcher die Bedienabsicht eines Nutzers anhand einer Annäherung eines Betätigungsobjekts an die Erfassungseinheit (3) erfassbar ist.

15. Bediensystem gemäß Anspruch 13 oder 14,
**dadurch gekennzeichnet, dass**
die Ausgabeeinheit (4) und die Erfassungseinheit (3) von einem Touchscreen (2) umfasst sind.

## Claims

1. Method for providing a user interface, in particular in a vehicle, wherein:
- graphic data of a user interface are generated and output; wherein a standard mode or a configuration mode may be activated for the user interface; wherein,
- when the standard mode is activated, the user interface comprises a direct access area (10); and,
- when the configuration mode is activated, the user interface comprises a configuration area (20), wherein
- the configuration area (20) comprises a plurality of program icons (21.1 to 21.14), each of which is associated with an application program; -
- wherein an additional gesture is detected for a program icon (21.1 to 21.14), the additional gesture comprising an association of the program icon (21.1 to 21.14) with a position of the direct access area (10); and
- based on the additional gesture, a direct access object (26) that is associated with the application program of the program icon (21.1 to 21.14) is generated for the direct access area (10) and is arranged in the direct access area (10) based on the additional gesture, wherein
- a displacement animation for the associated program icon (21.1 to 21.14) is generated when the additional gesture is detected, wherein
- the displacement animation comprises a movement of the program icon (21.1 to 21.14) along a displacement trajectory,
**characterized in that**
- a continuous reduction of the program icon (21.1 to 21.14) is effected during the movement along at least a portion of the displacement trajectory, and
- an operating intention is detected when the standard mode is activated, wherein the direct access area (10) is displayed or hidden depending on the operating intention.

2. Method according to claim 1,
**characterized in that**
the continuous reduction of the program icon (21.1 to 21.14) is effected by a scaling factor that is generated by a continuous function depending on a position of the program icon (21.1 to 21.14).

3. Method according to any one of the preceding claims,
**characterized in that**
following the additional gesture, the reduced program icon (21.1 to 21.14) is replaced by the direct access object (26), the direct access object (26) comprising a simplified representation relative to the program icon (21.1 to 21.14).

4. Method according to any one of the preceding claims,
**characterized in that**
the user interface comprises a switch area (11) and the standard mode or the configuration mode is activated by means of actuation of the switch area (11).

5. Method according to any one of the preceding claims,
**characterized in that**
an additional gesture originating from the direct access area (10) is detected and the standard mode or the configuration mode is activated depending on a direction of the additional gesture.

6. Method according to any one of the preceding claims,
**characterized in that**
a transition animation is generated and output upon transition between the standard mode and the configuration mode.

7. Method according to one of the preceding claims,
**characterized in that**
the configuration area (20) is highlighted relative to other areas of the user interface when the configuration mode is activated.

8. Method according to any one of the preceding claims,
**characterized in that**
the plurality of program icons (21.1 to 21.14) is arranged in the configuration area (20) on the basis of a matrix.

9. Method according to any one of the preceding claims, **characterized in that**
upon the additional gesture, a wildcard icon (17; 22) is displayed depending on the position of the program icon (21.1 to 21.14).

10. Method according to any one of the preceding claims,
**characterized in that**
the direct access area (10) comprises at least one direct access object (12; 13; 14; 15; 26) and the at least one direct access object (12; 13; 14; 15; 26) is adjacent to a central area of the direct access area (10).

11. Method according to any one of the preceding claims,
**characterized in that**
the direct access area (10) has two areas, wherein up to five, preferably up to three, direct access objects (12; 13; 14; 15; 26) may be arranged in each of the areas.

12. Method according to one of the preceding claims,
**characterized in that**
if the configuration mode is activated, a proximity gesture is detected for a direct access object (12; 13; 14; 15; 26), wherein the proximity gesture removes the direct access object (12; 13; 14; 15; 26) from the direct access area (10).

13. Operating system for providing a user interface, comprising
- a computing unit (5), through which the graphics data of a user interface may be generated; wherein,
- a standard mode or a configuration mode may be activated for the user interface; wherein,
- when the standard mode is activated, the user interface comprises a direct access area (10); and,
- when the configuration mode is activated, the user interface comprises a representation of the direct access area (10) and a configuration area (20), wherein
- the configuration area comprises a plurality of program icons (21.1 to 21.14) each of which is associated with an application program;
- an output unit (4) through which the user interface may be output; and
- a detection unit (3) through which an additional gesture may be detected for a program icon (21.1 to 21.14), wherein the additional gesture comprises an association of the program icon (21.1 to 21.14) with a position of the direct access area (10); wherein
- a direct access object (26) associated with the application program of the program icon (21.1 to 21.14) may be generated for the direct access area (10), while an arrangement of the direct access object (26) in the direct access area (10) may be generated by means of the additional gesture; wherein
- a displacement animation for the associated program icon (21.1 to 21.14) may be generated during the detection of the additional gesture,, wherein
- the displacement animation comprises a displacement of the program icon (21.1 to 21.14) along a displacement trajectory,
**characterized in that**
- a continuous reduction of the program icon (21.1 to 21.14) may be output during the displacement along at least a portion of the displacement trajectory, and
- when the standard mode is activated, an operating intention may be detected and the direct access area (10) may be displayed or hidden depending on the operating intention.

14. Operating system according to claim 13,
**characterized in that**
a proximity detection device (8) may detect the user's intention to operate based on the approach of an actuation object to the detection unit (3).

15. Operating system according to claim 13 or 14,
**characterized in that**
the output unit (4) and the detection unit (3) are covered by a touch screen (2).

## Revendications

1. Procédé de mise à disposition d'une interface utilisateur, plus particulièrement dans un véhicule, dans lequel
des données graphiques d'une interface utilisateur sont générées et affichées ; moyennant quoi
pour l'interface utilisateur, un mode standard ou un mode de configuration peut être activé ; moyennant quoi
lorsque le mode standard est activé, l'interface utilisateur comprend une zone à accès direct (10) ; et
lorsque le mode de configuration est activé, l'interface utilisateur comprend une zone de configuration (20), moyennant quoi
la zone de configuration (20) comprend une pluralité de symboles de programmes (21.1 à 21.14) qui sont attribués chacun à un programme d'application ;
pour un symbole de programme (21.1 à 21.14), un geste d'ajout est détecté, le geste d'ajout comprenant une attribution du symbole de programme (21.1 à 21.14) à une position de la zone à accès direct (10) ; et
à l'aide du geste d'ajout, un objet à accès direct (26), qui est attribué au programme d'application du symbole de programme (21.1 à 21.14), est généré pour la zone à accès direct (10) et est disposé à l'aide du geste d'ajout dans la zone à accès direct (10), moyennant quoi
pendant que le geste d'ajout est détecté, une animation de déplacement pour le symbole de programme (21.1, 21.14) correspondant est générée, moyennant quoi
l'animation de déplacement comprenant un déplacement du symbole de programme (21 à 21.14) le long d'une trajectoire de déplacement,
**caractérisé en ce que**
pendant le déplacement le long d'au moins une portion de la trajectoire de déplacement, une réduction continue du symbole de programme (21.1 à 21.14) est affichée et
lorsque le mode standard est activé, une intention de commande est détectée et la zone à accès direct (10) est affichée ou masquée en fonction de l'intention de commande.

2. Procédé selon la revendication 1,
**caractérisé en ce que**
la réduction continue du symbole de programme (21.1 à 21.14) est générée à l'aide d'un facteur de mise à l'échelle, qui est généré à l'aide d'une fonction continue en fonction d'une position du symbole de programme (21.1 à 21.14).

3. Procédé selon l'une des revendications précédentes,
**caractérisé en ce que**
après le geste d'ajout, le symbole de programme (21.1 à 21.14) réduit est remplacé par l'objet à accès direct (26), l'objet à accès direct (26) comprenant une représentation simplifiée par rapport au symbole de programme (21.1 à 21.14).

4. Procédé selon l'une des revendications précédentes,
**caractérisé en ce que**
l'interface utilisateur comprend un bouton (11) et, à l'aide d'un actionnement du bouton (11), le mode standard ou le mode de configuration est activé.

5. Procédé selon l'une des revendications précédentes,
**caractérisé en ce que**
un geste d'effleurement partant de la zone à accès direct (10) est détecté et, en fonction d'une direction du geste d'effleurement, le mode standard ou le mode de configuration est activé.

6. Procédé selon l'une des revendications précédentes,
**caractérisé en ce que**
lors d'une transition entre le mode standard et le mode de configuration, une animation de transition est générée et affichée.

7. Procédé selon l'une des revendications précédentes,
**caractérisé en ce que**
lorsque le mode de configuration est activé, la zone de configuration (20) est représentée avec une mise en exergue par rapport à d'autres zones de l'interface utilisateur.

8. Procédé selon l'une des revendications précédentes,
**caractérisé en ce que**
la pluralité de symboles de programme (21.1 à 21.14) est disposée dans la zone de configuration (20) à l'aide d'une matrice.

9. Procédé selon l'une des revendications précédentes,
**caractérisé en ce que**
lors du geste d'ajout, en fonction de la position du symbole de programme (21.1 à 21.14), un symbole de remplacement (17 ; 22) est affiché.

10. Procédé selon l'une des revendications précédentes,
**caractérisé en ce que**
la zone à accès direct (10) comprend au moins un objet à accès direct (12 ; 13 ; 14 ; 15 ; 26) et l'au moins un objet à accès direct (12 ; 13 ; 14 ; 15 ; 26) est disposé de manière adjacente à une partie centrale de la zone à accès direct (10).

11. Procédé selon l'une des revendications précédentes,
**caractérisé en ce que**
la zone à accès direct (10) comprend deux parties et, dans chacune des parties, jusqu'à cinq, de préférence jusqu'à trois, objets à accès direct (12 ; 13 ; 14 ; 15 ; 26) peuvent être disposés.

12. Procédé selon l'une des revendications précédentes,
**caractérisé en ce que**
lorsque le mode de configuration est activé, pour un objet à accès direct (12 ; 13 ; 14 ; 15 ; 26), un geste d'élimination est détecté et, à l'aide du geste d'élimination, l'objet à accès direct (12 ; 13 ; 14 ; 15 ; 26) est éliminé de la zone à accès direct (10).

13. Système de commande pour la mise à disposition d'une interface utilisateur, comprenant
une unité de calcul (5), par l'intermédiaire de laquelle les données graphiques d'une interface utilisateur peuvent être générées ; moyennant quoi,
pour l'interface utilisateur, un mode standard ou un mode de configuration peut être activé ; moyennant quoi
lorsque le mode standard est activé, l'interface utilisateur comprend une zone à accès direct (10) ; et
lorsque le mode de configuration est activé, l'interface utilisateur comprend une représentation de la zone à accès direct (10) ainsi qu'une zone de configuration (20), moyennant quoi
la zone de configuration comprend une pluralité de symboles de programmes (21.1 à 21.14) qui sont attribués chacun à un programme d'application ;
une unité de sortie (4) par l'intermédiaire de laquelle l'interface utilisateur peut être affichée ; et
une unité de détection (3) par l'intermédiaire de laquelle, pour un symbole de programme (21.1 à 21.14), un geste d'ajout peut être détecté, le geste d'ajout comprenant une attribution du symbole de programme (21.1 à 21.14) à une position de la zone à accès direct (10) ; moyennant quoi
à l'aide du geste d'ajout, un objet à accès direct (26), qui est attribué au programme d'application du symbole de programme (21.1 à 21.14), peut être généré pour la zone à accès direct (10) et, à l'aide du geste d'ajout, une disposition de l'objet à accès direct (26) dans la zone à accès direct (10) peut être générée, moyennant quoi
pendant la détection du geste d'ajout, une animation de déplacement peut être générée pour le symbole de programme (21.1 à 21.14) correspondant, moyennant quoi
l'animation de déplacement comprend un déplacement du symbole de programme (21.1 à 21.14) le long d'une trajectoire de déplacement,
**caractérisé en ce que**
pendant le déplacement le long d'au moins une portion de la trajectoire de déplacement, une réduction continue du symbole de programme (21.1 à 21.14) peut être affichée et
lorsque le mode standard est activé, une intention de commande peut être détectée et la zone à accès direct (10) peut être affichée ou masquée en fonction de l'intention de commande.

14. Système de commande selon la revendication 13,
**caractérisé par**
un dispositif de détection d'approche (8), au moyen duquel l'intention de commande d'un utilisateur peut être détectée à l'aide d'une approche d'un objet d'actionneur de l'unité de détection (3).

15. Système de commande selon la revendication 13 ou 14,
**caractérisé en ce que**
l'unité de sortie (4) et l'unité de détection (3) sont incluses dans un écran tactile (2).
